# EUROPEAN PATENT APPLICATION

(11) **EP 4 170 989 A1**
(43) Date of publication of application: **26.04.2023**
(21) Application number: 21829502.0
(22) Date of filing: 16.06.2021
(51) Int. Cl.: H04L 29/12

(54) **MESSAGE PROCESSING METHOD AND DEVICE, AND COMPUTER READABLE STORAGE MEDIUM**

(30) Priority: 23.06.2020 CN 202010581645
(71) Applicant: ZTE Corporation, Shenzhen, Guangdong 518057 (CN)
(72) Inventor: XU, Lin, Shenzhen, Guangdong 518057 (CN)
(74) Representative: Zoli, Filippo
(86) International application number: PCT/CN2021/100406
(87) International publication number: WO 2021/259111

(57) **Abstract**

A message processing method and device, and a computer readable storage medium. The method comprises: a message sending network element obtains an association rule (S301); the message sending network element obtains a message to be sent and a source IP address thereof (S302); the message sending network element determines, according to the association rule, a destination processor corresponding to an address segment where the source IP address is located, and sends said message to the destination processor (S303); multiple processors obtain the association rule (S304); the destination processor obtains said message and the source IP address thereof (S305); and the destination processor determines, according to the association rule, the address segment where the source IP address is located, and sends said message and the address segment where the source IP address is located to a router by means of a border gateway protocol (BGP) (S306).

## Description

### CROSS-REFERENCE TO RELATED APPLICATION

The present application is filed on the basis of Chinese patent application No. 202010581645.4 filed June 23, 2020, and claims priority to the Chinese patent application, the entire contents of which are incorporated herein by reference.

### TECHNICAL FIELD

The present invention relates to the field of network technologies, and in particular, to a message processing method and apparatus, and a computer-readable storage medium.

### BACKGROUND

With the exhaustion of IPv4 addresses, IPv6 addresses have been put into use in the current public network, and supporting forwarding of IPv6 messages has already been a basic requirement on network devices. In some cases, addresses of IPv6 messages are translated by using IPv6-to-IPv6 Network Address Translation (NAT) for address aggregation, so that downlink messages can return to the same uplink device. However, operators do not want to perform NAT translation on IPv6 addresses, because such translation will lead to performance degradation and break the "interconnection" of the Internet, making some IP addresses no longer bidirectionally reachable. However, without NAT translation, addresses of uplink IPv6 messages from a device are discrete, such that the downlink messages cannot return to the same uplink device. Therefore, how to enable a downlink message to return to the same uplink device without performing NAT translation becomes an urgent problem to be solved.

### SUMMARY

The following is a summary of the subject matter set forth in this description. This summary is not intended to limit the scope of protection of the claims.

In accordance with a first aspect of the present invention, an embodiment provides a message processing method, which is applied to a message sending network element. The method includes: acquiring an association rule, where the association rule is used for associating a plurality of address segments obtained by dividing an IPv6 address pool with a plurality of processing machines; acquiring a message to be sent and a source Internet Protocol (IP) address of the message to be sent; and determining a destination processing machine corresponding to an address segment where the source IP address is located according to the association rule, and sending the message to be sent to the destination processing machine.

In accordance with a second aspect of the present invention, an embodiment provides a message processing method, which is applied to a processing machine. The method includes: acquiring an association rule, where the association rule is used for associating a plurality of address segments obtained by dividing an IPv6 address pool with a plurality of processing machines; acquiring a message to be sent and a source Internet Protocol (IP) address of the message to be sent; and determining an address segment where the source IP address is located according to the association rule, and sending the message to be sent and the address segment where the source IP address is located to a router through a Border Gateway Protocol (BGP).

In accordance with a third aspect of the present invention, an embodiment provides a message processing method, which is applied to a message processing apparatus including a message sending network element and a plurality of processing machines. The method includes: acquiring, by the message sending network element, an association rule, where the association rule is used for associating a plurality of address segments obtained by dividing an IPv6 address pool with the plurality of processing machines; acquiring, by the message sending network element, a message to be sent and a source Internet Protocol (IP) address of the message to be sent; determining, by the message sending network element, a destination processing machine corresponding to an address segment where the source IP address is located according to the association rule, and sending the message to be sent to the destination processing machine; acquiring, by the plurality of processing machines, the association rule synchronized from the message sending network element; acquiring, by the destination processing machine, the message to be sent and the source IP address of the message to be sent from the message sending network element; and determining, by the destination processing machine, the address segment where the source IP address is located according to the association rule, and sending the message to be sent and the address segment where the source IP address is located to a router through a Border Gateway Protocol (BGP).

In accordance with a fourth aspect of the present invention, an embodiment provides a message processing apparatus. The apparatus includes a message sending network element and a plurality of processing machines. The message sending network element acquires an association rule, where the association rule is used for associating a plurality of address segments obtained by dividing an IPv6 address pool with the plurality of processing machines; the message sending network element acquires a message to be sent and a source Internet Protocol (IP) address of the message to be sent; the message sending network element determines a destination processing machine corresponding to an address segment where the source IP address is located according to the association rule, and sends the message to be sent to the destination processing machine; the plurality of processing machines acquire the association rule synchronized from the message sending network element; the destination processing machine acquires the message to be sent and the source IP address of the message to be sent from the message sending network element; and the destination processing machine determines the address segment where the source IP address is located according to the association rule, and sends the message to be sent and the address segment where the source IP address is located to a router through a Border Gateway Protocol (BGP).

In accordance with a fifth aspect of the present invention, an embodiment provides a message processing apparatus. The apparatus includes: a memory, a processor, and a computer program stored in the memory and executable by the processor which, when executed by the processor, causes the processor to implement the message processing method in accordance with the second aspect or the message processing method in accordance with the third aspect.

In accordance with a sixth aspect of the present invention, an embodiment provides a computer-readable storage medium storing a computer-executable program which, when executed by a computer, causes the computer to implement the foregoing message processing methods.

Additional features and advantages of the disclosure will be set forth in the description, and at least in part will be apparent from the description, or can be learned by the practice of the disclosure. The objects and other advantages of the present invention can be realized and obtained by the structures particularly pointed out in the description, claims and drawings.

### BRIEF DESCRIPTION OF DRAWINGS

The drawings are provided for an understanding of the technical schemes of the present invention, and constitute a part of the description. The drawings and the embodiments of the present invention are used to illustrate the technical schemes of the present invention, and are not intended to limit the technical schemes of the present invention.
FIG. 1 is a flowchart of a message processing method according to an embodiment of the present invention.
FIG. 2 is a flowchart of a message processing method according to another embodiment of the present invention.
FIG. 3 is a flowchart of a message processing method according to another embodiment of the present invention.
FIG. 4 is a schematic structural diagram of a message processing apparatus according to an embodiment of the present invention.
FIG. 5 is a schematic structural diagram of a message processing apparatus according to an embodiment of the present invention.

### DETAILED DESCRIPTION

To make the objects, technical schemes, and advantages of the present invention clear, the present invention is described in detail with reference to accompanying drawings and embodiments. It should be understood that the embodiments described herein are merely used for illustrating the present invention, and are not intended to limit the present invention.

It should be understood that in the description of the embodiments of the present invention, the term "plurality of" (or multiple) means at least two, the term such as "greater than", "less than", "exceed" or variants thereof before a number or series of numbers is understood to exclude this number itself. If used herein, the terms such as "first" and "second" are merely used for distinguishing technical features, and are not intended to indicate or imply relative importance, or implicitly point out the number of the indicated technical features, or implicitly point out the order of the indicated technical features.

With the exhaustion of IPv4 addresses, IPv6 addresses have been put into use in the current public network, and supporting forwarding of IPv6 messages has already been a basic requirement on network devices. In some cases, addresses of IPv6 messages are translated by using IPv6-to-IPv6 Network Address Translation (NAT) for address aggregation, so that downlink messages can return to the same uplink device. However, operators do not want to perform NAT translation on IPv6 addresses, because such translation will lead to performance degradation and break the "interconnection" of the Internet, making some IP addresses no longer bidirectionally reachable. However, without NAT translation, addresses of uplink IPv6 messages from a device are discrete, such that the downlink messages cannot return to the same uplink device. Therefore, how to enable a downlink message to return to the same uplink device without performing NAT translation becomes an urgent problem to be solved.

Embodiments of the present invention provide a message processing method and apparatus, and a computer-readable storage medium. First, a message sending network element acquires an association rule, where the association rule is used for associating a plurality of address segments obtained by dividing an IPv6 address pool with a plurality of processing machines. Then, the message sending network element acquires a message to be sent and a source IP address of the message to be sent, determines a destination processing machine corresponding to an address segment where the source IP address is located according to the association rule, and sends the message to be sent to the destination processing machine. In addition, a plurality of processing machines also acquire the association rule, and the destination processing machine acquires the message to be sent and the source IP address of the message to be sent. The destination processing machine determines the address segment where the source IP address is located according to the association rule, and sends the message to be sent and the address segment where the source IP address is located to a router through a Border Gateway Protocol (BGP). Based on this, when receiving a downlink message, the router returns the downlink message to the same uplink processing machine according to the BGP. Therefore, according to the scheme provided in the embodiments of the present invention, address aggregation is performed through the message sending network element and the processing machines, enabling a downlink message to return to the same uplink device without being subjected to NAT translation. Since the NAT translation is omitted, network performance is improved.

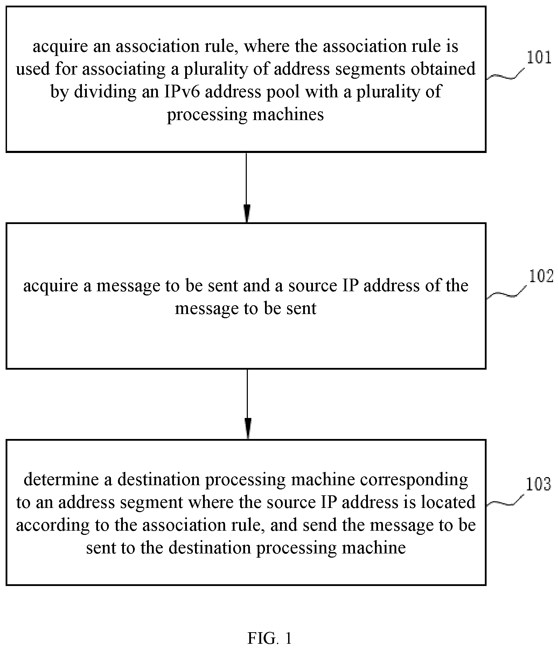

FIG. 1 is a flowchart of a message processing method according to an embodiment of the present invention. The message processing method is applied to a message sending network element. As shown in FIG. 1, the method includes, but is not limited to, the following steps S101 to S103.

At S 101, an association rule is acquired, where the association rule is used for associating a plurality of address segments obtained by dividing an IPv6 address pool with a plurality of processing machines.

At S102, a message to be sent and a source IP address of the message to be sent are acquired.

At S103, a destination processing machine corresponding to an address segment where the source IP address is located is determined according to the association rule, and the message to be sent is sent to the destination processing machine.

In an embodiment, the message sending network element acquires an association rule, where the association rule is used for associating a plurality of address segments obtained by dividing an IPv6 address pool with a plurality of processing machines. Then, the message sending network element acquires a message to be sent and a source IP address of the message to be sent, determines a destination processing machine corresponding to an address segment where the source IP address is located according to the association rule, and sends the message to be sent to the destination processing machine. Because the message sending network element acquires the association rule in advance, the message sending network element can determine the destination processing machine corresponding to the address segment where the source IP address is located according to the association rule, and send the message to be sent to the destination processing machine. In this embodiment, the association rule is used to associate the plurality of address segments obtained by dividing the IPv6 address pool with the plurality of processing machines, such that IPv6 message addresses in the same address segment can be aggregated to the same processing machine, to prevent addresses of uplink IPv6 messages from being discrete. Therefore, address aggregation is performed through the message sending network element, enabling a downlink message to return to the same uplink device without being subjected to NAT translation. Since the NAT translation is omitted, network performance is improved.

In an embodiment, S101 includes, but is not limited to, the following sub-step: acquiring the association rule, where the association rule is used for associating the plurality of address segments obtained by evenly dividing the IPv6 address pool with the plurality of processing machines, each of the address segments includes 2^{n∗}1024 IP addresses, and n is a natural number.

In the association rule, the IPv6 address pool for user terminals is evenly divided, so that each of the address segments includes 2^{n∗}1024 IP addresses, where n is a natural number. That is, the number of IP addresses in each address segment may be, but is not limited to, 1024, 2048, 4096, or 8192. Table A1 below is an example of dividing an address pool 1:2:3:0/48 into address segments each including 8192 addresses.

| Prefix | Prefix length | Segment No. | Address segment |
|---|---|---|---|
| 1:2:3:0 | 48 | 1 | 1:2:3:0/51 |
| 1:2:3:0 | 48 | 2 | 1:2:3:2000/51 |
| 1:2:3:0 | 48 | 3 | 1:2:3:4000/51 |
| 1:2:3:0 | 48 | 4 | 1:2:3:5FFF/51 |
| 1:2:3:0 | 48 | 5 | 1:2:3:7FFF/51 |
| 1:2:3:0 | 48 | 6 | 1:2:3:9FFF/51 |
| 1:2:3:0 | 48 | 7 | 1:2:3:BFFF/51 |
| 1:2:3:0 | 48 | 8 | 1:2:3:DFFF/51 |

In an embodiment, S101 may include, but is not limited to, the following sub-step: acquiring the association rule, where the association rule is used for sequentially and cyclically associating the plurality of address segments obtained by dividing the IPv6 address pool with the plurality of processing machines one by one. In this embodiment, the plurality of address segments are evenly allocated to and associated one by one with the processing machines, so that IPv6 message addresses in the same address segment can be aggregated to the same processing machine, to prevent addresses of uplink IPv6 messages from being discrete.

For example, as shown in Table B 1 below, a next-hop network element has three processing machines: processing machine 1, processing machine 2, and processing machine 3. NextHop No. represents a serial number of the processing machine, NextHopTunnel represents a tunnel address of the processing machine, and NextHopIPv6 represents an IPv6 interface address of the processing machine, respectively used for sending and receiving IPv6 messages.

| NextHop No. | NextHopTunnel | NextHopIPv6 |
|---|---|---|
| 1 | 1.1.1.1 | 2001:0:1:1 |
| 2 | 1.1.2.2 | 2001:0:2:2 |
| 3 | 1.1.3.3 | 2001:0:3:3 |

The eight address segments divided in Table A1 are sequentially and cyclically associated with the three processing machines in Table B1. For example, in the table below, the processing machine 1 stores three address segments respectively corresponding to Segment Nos. 1, 4, and 7, the processing machine 2 stores three address segments respectively corresponding to Segment Nos. 2, 5, and 8, and the processing machine 3 stores two address segments respectively corresponding to Segment Nos. 3 and 6. Such a storage manner has an advantage that the plurality of address segments can be evenly allocated to the processing machines.

| NextHop No. | Address segment 1 | Address segment 2 | Address segment 3 |
|---|---|---|---|
| 1 | 1 | 4 | 7 |
| 2 | 2 | 5 | 8 |
| 3 | 3 | 6 | |

In an embodiment, S103 may include, but is not limited to, the following sub-step: synchronizing the association rules to the plurality of processing machines, determining the destination processing machine corresponding to the address segment where the source IP address is located according to the association rule, and sending the message to be sent to the destination processing machine.

In this embodiment, a preset association rule may be stored in the processing machines. Therefore, in order for the processing machines to update the association rule synchronously, the association rule that associates the plurality of address segments with addresses of the plurality of processing machines one by one needs to be synchronized to processing machines of a next-hop network element. Then, the message sending network element determines the destination processing machine corresponding to the address segment where the source IP address is located according to the association rule, and sends the message to be sent to the destination processing machine. Based on this, the message sending network element sends messages to the next-hop network element according to the address segments to realize load sharing. It should be pointed out that after the association rule is synchronized to the plurality of processing machines, upon acquiring an instruction of enabling load sharing, the processing machine updates the association rule and forwards messages according to the updated association rule; otherwise, the processing machine forwards messages according to the original association rule.

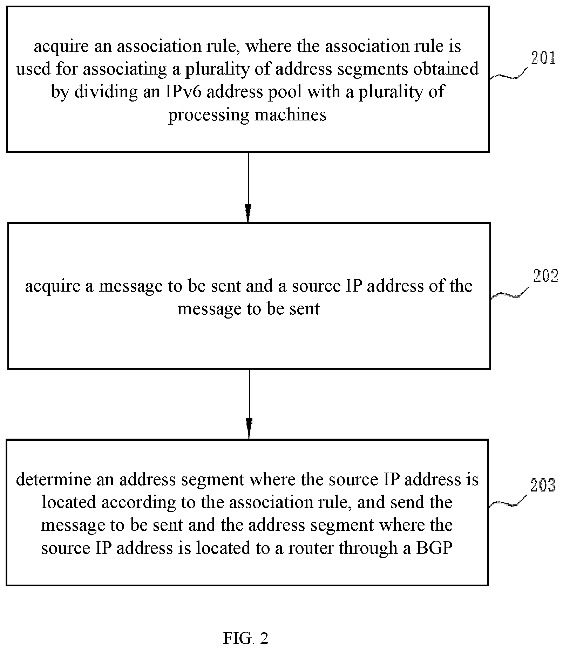

FIG. 2 is a flowchart of a message processing method according to an embodiment of the present invention. The message processing method is applied to a processing machine. As shown in FIG. 2, the method includes, but is not limited to, the following steps S201 to S203.

At S201, an association rule is acquired, where the association rule is used for associating a plurality of address segments obtained by dividing an IPv6 address pool with a plurality of processing machines.

At S202, a message to be sent and a source IP address of the message to be sent are acquired.

At S203, an address segment where the source IP address is located is determined according to the association rule, and the message to be sent and the address segment where the source IP address is located are sent to a router through a BGP.

In an embodiment, the processing machine acquires an association rule synchronized from a message sending network element, where the association rule is used for associating the plurality of address segments obtained by dividing the IPv6 address pool with the plurality of processing machines. Then, the processing machine acquires a message to be sent and a source IP address of the message to be sent from the message sending network element, determines an address segment where the source IP address is located according to the association rule, and sends the message to be sent and the address segment where the source IP address is located to a router through a BGP. Therefore, when receiving a downlink message, the router returns the downlink message to the same uplink processing machine according to the BGP. In this embodiment, IPv6 message addresses in the same address segment can be aggregated to the same processing machine, to prevent addresses of uplink IPv6 messages from being discrete. Therefore, address aggregation is performed through the processing machine, enabling a downlink message to return to the same uplink device without being subjected to NAT translation. Since the NAT translation is omitted, network performance is improved.

The BGP is an inter-autonomous system routing protocol running over TCP, which can realize communication between autonomous systems and propagate network reachability information. The BGP is an exterior gateway protocol that allows one AS to communicate with another AS. The BGP allows an AS to advertise reachability information of its internal network to other ASs or advertise routing information of other networks reachable through the AS. At the same time, the AS can also learn such information from another AS. What the BGP provides for each destination network is information of a next-hop node. When the BGP advertises reachability information of the destination network, an advertisement not only specifies next hop information of the destination network, but also includes a path vector, i.e., a list of ASs that a message needs to pass through to reach the destination network, allowing a receiver to learn information about a path to the destination network.

In an embodiment, the processing machines are located in a virtual firewall.

In this embodiment, it is assumed that the next hop network element is a virtual firewall having a plurality of processing machines. During message forwarding, when messages to be sent are sent to the processing machines of the firewall according to an association rule, tunnel or policy-based routing may be used. The virtual firewall may determine address segments where source IP addresses of the messages to be sent are located according to the association rule, and send the messages to be sent and the address segments where the source IP addresses are located to a router through the BGP, such that downlink messages return to the virtual firewall according to the BGP. The virtual firewall may perform a security check on the downlink messages.

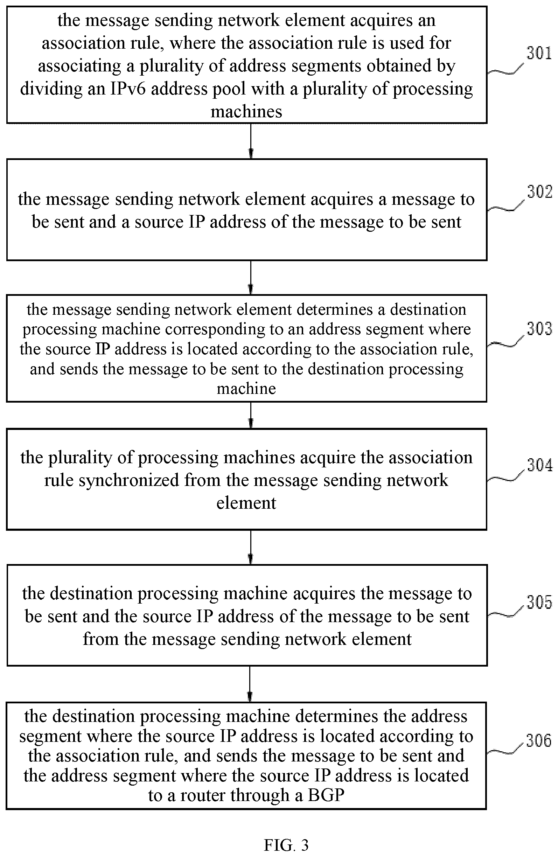

FIG. 3 is a flowchart of a message processing method according to an embodiment of the present invention. The message processing method is applied to a message processing apparatus. The message processing apparatus includes a message sending network element and a plurality of processing machines. As shown in FIG. 3, the method includes, but is not limited to, the following steps S301 to S306.

At S301, the message sending network element acquires an association rule, where the association rule is used for associating a plurality of address segments obtained by dividing an IPv6 address pool with a plurality of processing machines.

At S302, the message sending network element acquires a message to be sent and a source IP address of the message to be sent.

At S303, the message sending network element determines a destination processing machine corresponding to an address segment where the source IP address is located according to the association rule, and sends the message to be sent to the destination processing machine.

At S304, the plurality of processing machines acquire the association rule synchronized from the message sending network element.

At S305, the destination processing machine acquires the message to be sent and the source IP address of the message to be sent from the message sending network element.

At S306, the destination processing machine determines the address segment where the source IP address is located according to the association rule, and sends the message to be sent and the address segment where the source IP address is located to a router through a BGP.

In an embodiment, the message sending network element acquires an association rule, where the association rule is used for associating the plurality of address segments obtained by dividing the IPv6 address pool with the plurality of processing machines. Then, the message sending network element acquires a message to be sent and a source IP address of the message to be sent, determines a destination processing machine corresponding to an address segment where the source IP address is located according to the association rule, and sends the message to be sent to the destination processing machine. The plurality of processing machines acquire the association rule synchronized from the message sending network element. Then, the destination processing machine acquires the message to be sent and the source IP address of the message to be sent from the message sending network element, determines the address segment where the source IP address is located according to the association rule, and sends the message to be sent and the address segment where the source IP address is located to a router through a BGP. Therefore, when receiving a downlink message, the router returns the downlink message to the same uplink processing machine according to the BGP. In this embodiment, the association rule is used to associate the plurality of address segments obtained by dividing the IPv6 address pool with the plurality of processing machines, such that IPv6 message addresses in the same address segment can be aggregated to the same processing machine, to prevent addresses of uplink IPv6 messages from being discrete. Based on this, address aggregation is performed through the message sending network element and the processing machines, enabling a downlink message to return to the same uplink device without being subjected to NAT translation. Since the NAT translation is omitted, network performance is improved.

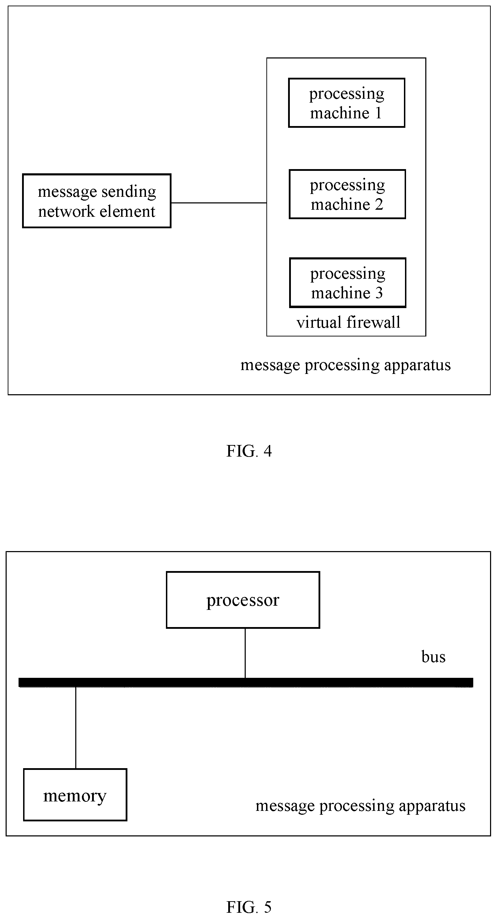

FIG. 4 is a schematic diagram of a message processing apparatus according to an embodiment of the present invention. As shown in FIG. 4, the message processing apparatus includes a message sending network element and a plurality of processing machines.

The message sending network element acquires an association rule, where the association rule is used for associating a plurality of address segments obtained by dividing an IPv6 address pool with a plurality of processing machines.

The message sending network element acquires a message to be sent and a source IP address of the message to be sent.

The message sending network element determines a destination processing machine corresponding to an address segment where the source IP address is located according to the association rule, and sends the message to be sent to the destination processing machine.

The plurality of processing machines acquire the association rule synchronized from the message sending network element.

The destination processing machine acquires the message to be sent and the source IP address of the message to be sent from the message sending network element.

The destination processing machine determines the address segment where the source IP address is located according to the association rule, and sends the message to be sent and the address segment where the source IP address is located to a router through a BGP.

In an embodiment, the message sending network element acquires an association rule, where the association rule is used for associating the plurality of address segments obtained by dividing the IPv6 address pool with the plurality of processing machines. Then, the message sending network element acquires a message to be sent and a source IP address of the message to be sent, determines a destination processing machine corresponding to an address segment where the source IP address is located according to the association rule, and sends the message to be sent to the destination processing machine. The plurality of processing machines acquire the association rule synchronized from the message sending network element. Then, the destination processing machine acquires the message to be sent and the source IP address of the message to be sent from the message sending network element, determines the address segment where the source IP address is located according to the association rule, and sends the message to be sent and the address segment where the source IP address is located to a router through a BGP. Therefore, when receiving a downlink message, the router returns the downlink message to the same uplink processing machine according to the BGP. In this embodiment, the association rule is used to associate the plurality of address segments obtained by dividing the IPv6 address pool with the plurality of processing machines, such that IPv6 message addresses in the same address segment can be aggregated to the same processing machine, to prevent addresses of uplink IPv6 messages from being discrete. Based on this, address aggregation is performed through the message sending network element and the processing machines, enabling a downlink message to return to the same uplink device without being subjected to NAT translation. Since the NAT translation is omitted, network performance is improved.

In an embodiment, as shown in FIG. 4, for example, the message sending network element first acquires an association rule. When sending messages, the message sending network element acquires addresses of three messages to be sent, which are 2001:0DB8::1428:57ab, 2001:0DB8::1428:57ac, and 2001:0DB8::1428:57ad, then determines according to the association rule that an address segment where the three message addresses are located is 2001:0DB8::1428:0/48 and a destination processing machine associated with the address segment is a processing machine 1 of a virtual firewall vFW, and sends the three messages to be sent, i.e., 2001:0DB8::1428:57ab, 2001:0DB8::1428:57ac, and 2001:0DB8::1428:57ad to the processing machine 1. Then the processing machine 1 sends the messages out, and sends the address segment 2001:0DB8::1428:0/48 to the router through the BGP. In this way, when receiving a downlink message, the router returns the downlink message to the same uplink processing machine according to the BGP.

As shown in FIG. 5, an embodiment of the present invention further provides a message processing apparatus.

The message processing apparatus includes: one or more processors and a memory. In FIG. 5, one processor and one memory are taken as an example. The processor and the memory may be connected by a bus or in other ways. Connection by a bus is taken as an example in FIG. 5.

The memory, as a non-transitory computer-readable storage medium, may be configured for storing a non-transitory software program and a non-transitory computer-executable program, for example, the message processing method in the embodiments of the present invention. The processor executes the non-transitory software program and the non-transitory computer-executable program stored in the memory, to implement the message processing method in the embodiments of the present invention.

The memory may include a program storage area and a data storage area. The program storage area may store an operating system, and an application required by at least one function. The storage data area may store data and the like required for executing the message processing method in the embodiments of the present invention. In addition, the memory may include a high-speed random-access memory, and may also include a non-transitory memory, e.g., at least one magnetic disk storage device, flash memory device, or other non-transitory solid-state storage device. In some implementations, the memory includes memories located remotely from the processor, and the remote memories may be connected to the processor via a network. Examples of the network include, but are not limited to, the Internet, an intranet, a local area network, a mobile communication network, and combinations thereof.

The non-transitory software program and the non-transitory computer-executable program required for implementing the message processing method in the embodiments of the present invention are stored in the memory which, when executed by one or more processors, cause the one or more processors to implement the message processing method in the embodiments of the present invention, for example, to implement the steps S101 to S103 in the method shown in FIG. 1 and steps S201 to S203 in the method shown in FIG. 2. First, a message sending network element acquires an association rule, where the association rule is used for associating a plurality of address segments obtained by dividing an IPv6 address pool with a plurality of processing machines. Then, the message sending network element acquires a message to be sent and a source IP address of the message to be sent, determines a destination processing machine corresponding to an address segment where the source IP address is located according to the association rule, and sends the message to be sent to the destination processing machine. In addition, the plurality of processing machines acquire the association rule synchronized from the message sending network element. Then, the processing machine acquires the message to be sent and the source IP address of the message to be sent from the message sending network element, determines the address segment where the source IP address is located according to the association rule, and sends the message to be sent and the address segment where the source IP address is located to the router through the BGP. Based on this, when receiving a downlink message, the router returns the downlink message to the same uplink processing machine according to the BGP. Therefore, address aggregation is performed through the message sending network element and the processing machines, enabling a downlink message to return to the same uplink device without being subjected to NAT translation. Since the NAT translation is omitted, network performance is improved.

In this embodiment of the present invention, first, a message sending network element acquires an association rule, where the association rule is used for associating a plurality of address segments obtained by dividing an IPv6 address pool with a plurality of processing machines. Then, the message sending network element acquires a message to be sent and a source IP address of the message to be sent, determines a destination processing machine corresponding to an address segment where the source IP address is located according to the association rule, and sends the message to be sent to the destination processing machine. In addition, a plurality of processing machines also acquire the association rule, and the destination processing machine acquires the message to be sent and the source IP address of the message to be sent. The destination processing machine determines the address segment where the source IP address is located according to the association rule, and sends the message to be sent and the address segment where the source IP address is located to a router through a BGP. Based on this, when receiving a downlink message, the router returns the downlink message to the same uplink processing machine according to the BGP. Therefore, according to the scheme provided in the embodiments of the present invention, address aggregation is performed through the message sending network element and the processing machines, enabling a downlink message to return to the same uplink device without being subjected to NAT translation. Since the NAT translation is omitted, network performance is improved.

In addition, an embodiment of the present invention further provides a computer-readable storage medium, storing a computer-executable program which, when executed by one or more control processors, for example, by a processor in FIG. 5, may cause the one or more processors to implement the message processing method in the embodiments of the present invention, for example, to implement the steps S101 to S103 in the method shown in FIG. 1 and steps S201 to S203 in the method shown in FIG. 2. First, a message sending network element acquires an association rule, where the association rule is used for associating a plurality of address segments obtained by dividing an IPv6 address pool with a plurality of processing machines. Then, the message sending network element acquires a message to be sent and a source IP address of the message to be sent, determines a destination processing machine corresponding to an address segment where the source IP address is located according to the association rule, and sends the message to be sent to the destination processing machine. In addition, the plurality of processing machines acquire the association rule synchronized from the message sending network element. Then, the processing machine acquires the message to be sent and the source IP address of the message to be sent from the message sending network element, determines the address segment where the source IP address is located according to the association rule, and sends the message to be sent and the address segment where the source IP address is located to the router through the BGP. Based on this, when receiving a downlink message, the router returns the downlink message to the same uplink processing machine according to the BGP. Therefore, address aggregation is performed through the message sending network element and the processing machines, enabling a downlink message to return to the same uplink device without being subjected to NAT translation. Since the NAT translation is omitted, network performance is improved.

Those having ordinary skills in the art can understand that all or some of the steps in the methods disclosed above and the functional modules/units in the system and the apparatus may be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as a computer-readable program, data structures, program modules, or other data). The computer storage medium includes, but is not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium that can be used to store the desired information and can be accessed by a computer. In addition, as is known to those having ordinary skills in the art, the communication medium typically includes a computer-readable program, data structures, program modules, or other data in a modulated data signal such as a carrier or other transport mechanism, and may include any information passing medium.

Although some implementations of the present invention have been described above, the present invention is not limited to the implementations described above. Those having ordinary skills in the art can make various equivalent modifications or replacements without departing from the scope of the present invention. Such equivalent modifications or replacements fall within the scope defined by the claims of the present invention.

## Claims

1. A message processing method, which is applied to a message sending network element, the method comprising:
acquiring an association rule, wherein the association rule is used for associating a plurality of address segments obtained by dividing an IPv6 address pool with a plurality of processing machines;
acquiring a message to be sent and a source Internet Protocol, IP, address of the message to be sent; and
determining a destination processing machine corresponding to an address segment where the source IP address is located according to the association rule, and sending the message to be sent to the destination processing machine.

2. The method of claim 1, wherein acquiring an association rule, the association rule being used for associating a plurality of address segments obtained by dividing an IPv6 address pool with a plurality of processing machines, comprises:
acquiring the association rule, wherein the association rule is used for associating the plurality of address segments obtained by evenly dividing the IPv6 address pool with the plurality of processing machines, each of the address segments comprises 2^{n∗}1024 IP addresses, and n is a natural number.

3. The method of claim 1, wherein acquiring an association rule, the association rule being used for associating a plurality of address segments obtained by dividing an IPv6 address pool with a plurality of processing machines, comprises:
acquiring the association rule, wherein the association rule is used for sequentially and cyclically associating the plurality of address segments obtained by dividing the IPv6 address pool with the plurality of processing machines one by one.

4. The method of claim 1, wherein determining a destination processing machine corresponding to an address segment where the source IP address is located according to the association rule, and sending the message to be sent to the destination processing machine comprises:
synchronizing the association rules to the plurality of processing machines, determining the destination processing machine corresponding to the address segment where the source IP address is located according to the association rule, and sending the message to be sent to the destination processing machine.

5. A message processing method, which is applied to a processing machine, the method comprising:
acquiring an association rule, wherein the association rule is used for associating a plurality of address segments obtained by dividing an IPv6 address pool with a plurality of processing machines;
acquiring a message to be sent and a source Internet Protocol, IP, address of the message to be sent; and
determining an address segment where the source IP address is located according to the association rule, and sending the message to be sent and the address segment where the source IP address is located to a router through a Border Gateway Protocol, BGP.

6. The method of claim 5, wherein the processing machines are located in a virtual firewall.

7. A message processing method, which is applied to a message processing apparatus comprising a message sending network element and a plurality of processing machines, the method comprising:
acquiring, by the message sending network element, an association rule, wherein the association rule is used for associating a plurality of address segments obtained by dividing an IPv6 address pool with the plurality of processing machines;
acquiring, by the message sending network element, a message to be sent and a source Internet Protocol, IP, address of the message to be sent;
determining, by the message sending network element, a destination processing machine corresponding to an address segment where the source IP address is located according to the association rule, and sending the message to be sent to the destination processing machine;
acquiring, by the plurality of processing machines, the association rule synchronized from the message sending network element;
acquiring, by the destination processing machine, the message to be sent and the source IP address of the message to be sent from the message sending network element; and
determining, by the destination processing machine, the address segment where the source IP address is located according to the association rule, and sending the message to be sent and the address segment where the source IP address is located to a router through a Border Gateway Protocol, BGP.

8. A message processing apparatus, comprising a message sending network element and a plurality of processing machines, wherein:
the message sending network element acquires an association rule, wherein the association rule is used for associating a plurality of address segments obtained by dividing an IPv6 address pool with the plurality of processing machines;
the message sending network element acquires a message to be sent and a source Internet Protocol, IP, address of the message to be sent;
the message sending network element determines a destination processing machine corresponding to an address segment where the source IP address is located according to the association rule, and sends the message to be sent to the destination processing machine;
the plurality of processing machines acquire the association rule synchronized from the message sending network element;
the destination processing machine acquires the message to be sent and the source IP address of the message to be sent from the message sending network element; and
the destination processing machine determines the address segment where the source IP address is located according to the association rule, and sends the message to be sent and the address segment where the source IP address is located to a router through a Border Gateway Protocol, BGP.

9. A message processing apparatus, comprising: a memory, a processor, and a computer program stored in the memory and executable by the processor which, when executed by the processor, causes the processor to perform the message processing method of any one of claims 1 to 6.

10. A computer-readable storage medium, storing a computer-executable program which, when executed by a computer, causes the computer to perform the message processing method of any one of claims 1 to 6.
